Europäisches Patentamt

European Patent Office

Office européen des brevets

(19)

(11) Numéro de publication: **0 179 000**
**A1**

(12)

# DEMANDE DE BREVET EUROPEEN

(21) Numéro de dépôt: 85402017.9

(22) Date de dépôt: 18.10.85

(51) Int. Cl.⁴: **B 21 K 1/16**
**B 21 J 13/02, F 16 L 37/24**

(30) Priorité: 19.10.84 FR 8416022

(43) Date de publication de la demande:
23.04.86 Bulletin 86/17

(84) Etats contractants désignés:
AT BE CH DE GB IT LI LU NL SE

(71) Demandeur: ST MIHIEL S.A.
2, rue de la Marsoupe
F-55300 St. Mihiel(FR)

(72) Inventeur: Dumez, Roger
9, rue du Faubourg Saint Christophe
F-55300 Saint Mihiel(FR)

(74) Mandataire: Chauchard, Robert et al,
c/o Cabinet Malémont 42, avenue du Président Wilson
F-75116 Paris(FR)

(54) Procédé de fabrication par matriçage d'un raccord et raccord symétrique obtenu selon ce procédé.

(57) La présente invention concerne un procédé de fabrication d'un raccord du type comprenant deux griffes diamétralement opposées formées en saillie sur une face de raccordement du raccord et pourvues chacune d'une lèvre rentrante munie d'une encoche qui s'ouvre en direction de cette face, ainsi que deux ergots diamétralement opposés qui sont formés entre les deux griffes, sur la surface extérieure du raccord.

Selon l'invention, ce procédé consiste à matricer une masse de métal semi-fondu entre d'une part, une matrice en une seule pièce (24) d'axe vertical (Y), présentant la forme extérieure à donner au raccord et, d'autre part, un poinçon (33) à déplacement vertical présentant la forme intérieure du raccord sans ses parties en dépouille que l'on forme ensuite, après le durcissement du métal, lors de l'usinage de la face de raccordement. En outre, on peut produire les encoches des lèvres des griffes lors de ce matriçage, par un emboutissage réalisé sur toute la hauteur des lèvres, grâce à deux nervures verticales (35, 36) prévues sur le poinçon (33).

FIG. 4

EP 0 179 000 A1

Procédé de fabrication par matriçage d'un raccord et raccord symétrique obtenu
selon ce procédé

La présente invention se rapporte à un procédé de fabrication d'un raccord du type comprenant un corps de forme générale tubulaire qui comporte, à l'une de ses extrémités, une face de raccordement autour de laquelle sont formés en saillie des organes d'accouplement à un raccord complémentaire, ce procédé consistant à donner au raccord sa forme générale par matriçage d'une masse de métal ramolli, puis après durcissement de celui-ci, à usiner l'intérieur de l'ébauche de raccord ainsi obtenue pour donner au raccord sa forme définitive précise.

La présente invention a trait également à un raccord symétrique susceptible d'être fabriqué selon ce procédé et dont les moyens d'accouplement sont constitués par deux griffes diamétralement opposées, formées en saillie autour de la face de raccordement du corps et portant chacune une lèvre rentrante pourvue d'une encoche qui s'ouvre en direction de ladite face de raccordement, ainsi que par deux ergots diamétralement opposés, qui sont formés entre les griffes et se prolongent chacun latéralement, tous deux dans le même sens, par une barrette radiale.

On utilise essentiellement des raccords de ce type, également appelés "raccords express", pour connecter rapidement l'un à l'autre deux tuyaux de transport de gaz sous pression dont ils sont solidaires, par un simple encliquetage des ergots de l'un des raccords dans les encoches des griffes de l'autre, produit par une rotation angulaire relative des raccords.

Pour fabriquer de tels raccords, on procède à l'heure actuelle par un matriçage qui met en oeuvre une matrice formée de deux coques mobiles et un poinçon à déplacement horizontal.

Or, il s'est avéré à l'usage qu'un certain nombre d'inconvénients étaient rattachés à ce procédé de fabrication des raccords symétriques.

En premier lieu, ce procédé est d'une mise en oeuvre relativement longue car il faut tout d'abord amener les deux coques de la matrice en contact mutuel autour de la masse de métal ramolli, puis frapper celle-ci à l'aide du poinçon. En addition, l'utilisation d'une matrice en deux parties conduit à la formation d'une bavure longitudinale peu esthétique sur la surface extérieure du raccord fini.

En second lieu, la gravité n'agit pas de la même façon sur toutes les parties de la masse de métal ramolli prise et refoulée entre le poinçon et la matrice, ce qui risque de se traduire par une répartition non-uniforme du métal entre ces derniers et donc par des défauts sur le raccord fini.

En troisième lieu, le poinçon doit avoir une force de propulsion considérable pour qu'il puisse vaincre la résistance de la masse de métal ramolli et, pour pallier cette difficulté, on ne réalise par poinçonnage que la partie intérieure du raccord située entre les griffes, la partie restante étant après coup façonnée par exemple par tournage.

Mais l'inconvénient le plus important lié au procédé susmentionné est qu'une fois le matriçage réalisé, il faut usiner non seulement l'intérieur du raccord mais aussi l'encoche de chaque griffe par un fraisage en oblique relativement long et fastidieux, rendu nécessaire par la présence de l'autre griffe.

La présente invention se propose de remédier à tous ces inconvénients et, pour ce faire, elle a pour objet un procédé de fabrication d'un raccord tel que spécifié en préambule, qui se caractérise en ce que l'on réalise le matriçage de la masse de métal ramolli entre, d'une part, une matrice en une seule pièce dont l'empreinte est centrée autour d'un axe vertical et présente la forme extérieure à donner au raccord et, d'autre part, un poinçon à déplacement vertical présentant la forme intérieure du raccord sans ses parties en contre-dépouille que l'on forme ensuite, après le durcissement du métal, lors de l'usinage de la face de raccordement.

On comprendra qu'en premier lieu, le procédé selon l'invention conduit à une simplification appréciable de l'outillage utilisé pour la fabrication par matriçage des raccords. En complément à ce premier avantage, l'utilisation d'une matrice en une seule pièce, rendue possible par la propulsion verticale du poinçon, réduit la durée de l'opération de matriçage et élimine la formation d'une bavure sur la surface extérieure du raccord.

En outre, le fait que le poinçon soit propulsé dans une direction verticale se traduit par une meilleure répartition du métal ramolli dans toutes les parties en dépouille de l'espace qu'il définit avec la matrice et donc par un meilleur état de finition du raccord obtenu.

De plus, la gravité participe à l'action du poinçon et augmente ainsi sa force de pénétration dans la masse de métal ramolli. Il en résulte que l'on peut enfoncer le poinçon plus profondément et façonner à l'aide de celui-ci toute la longueur de la paroi de l'alésage intérieur du raccord. On supprime de cette façon les opérations de perçage et d'usinage complémentaire

3

jusqu'à présent nécessaire à cette fin et l'on fait ainsi une économie substantielle de métal.

Selon une caractéristique avantageuse du procédé selon l'invention, on utilise une matrice dont l'empreinte débouche, sur la face inférieure de cette dernière, par un alésage axial dans lequel est retenue, avec un certain jeu, une tige dont l'extrémité supérieure définit la forme d'une partie au moins de la face du raccord opposée à la face de raccordement de ce dernier. Cette disposition a pour but de dégazer l'empreinte de la matrice lors du poinçonnage pour éviter l'apparition, sur la surface extérieure du raccord, de défauts qui sinon seraient formés par les bulles d'air au contact du métal ramolli.

Selon un mode d'exécution préféré du procédé selon l'invention, appliqué à la fabrication d'un raccord du type spécifié en préambule, on produit les encoches des lèvres des griffes du raccord lors du matriçage du métal ramolli par un emboutissage réalisé sur toute la hauteur des lèvres grâce à une forme appropriée du poinçon.

De cette façon, on peut se passer de l'opération longue et fastidieuse de fraisage en oblique des encoches des griffes.

En résumé, le procédé selon l'invention permet, par la seule opération de matriçage, de produire une ébauche de raccord dans laquelle il suffit, pour obtenir le raccord final, d'usiner la face de raccordement, qui doit présenter un bon état de surface, et de dépouiller les griffes, ce qui peut être fait par cette même opération d'usinage.

Bien entendu, les griffes du raccord fini qui fait également l'objet de la présente invention, présentent des encoches ouvertes à leurs deux extrémités.

Ceci n'est pas gênant étant donné que, lorsque deux raccords de ce type sont assemblés, il suffit que ces encoches assurent, en coopération avec les ergots, un verrouillage en rotation dans la mesure où l'immobilisation des raccords dans la direction axiale résulte du contact des griffes avec les barrettes radiales. A fortiori, ces encoches ouvertes à leurs deux extrémités permettent de vérifier visuellement si les ergots sont bien encliquetés.

Un mode d'exécution du procédé objet de l'invention va maintenant être décrit, à titre d'exemple non limitatif, en référence aux dessins annexés dans lesquels :

- les figures 1 et 2 sont respectivement une vue de côté et une vue

4

de dessous d'un raccord symétrique fabriqué selon ce procédé ;

- la figure 3 est une vue en coupe longitudinale de ce même raccord ;

- la figure 4 représente l'outillage utilisé dans le cadre de ce procédé ; et

- la figure 5 illustre l'opération de matriçage produisant le raccord des figures 1 à 3.

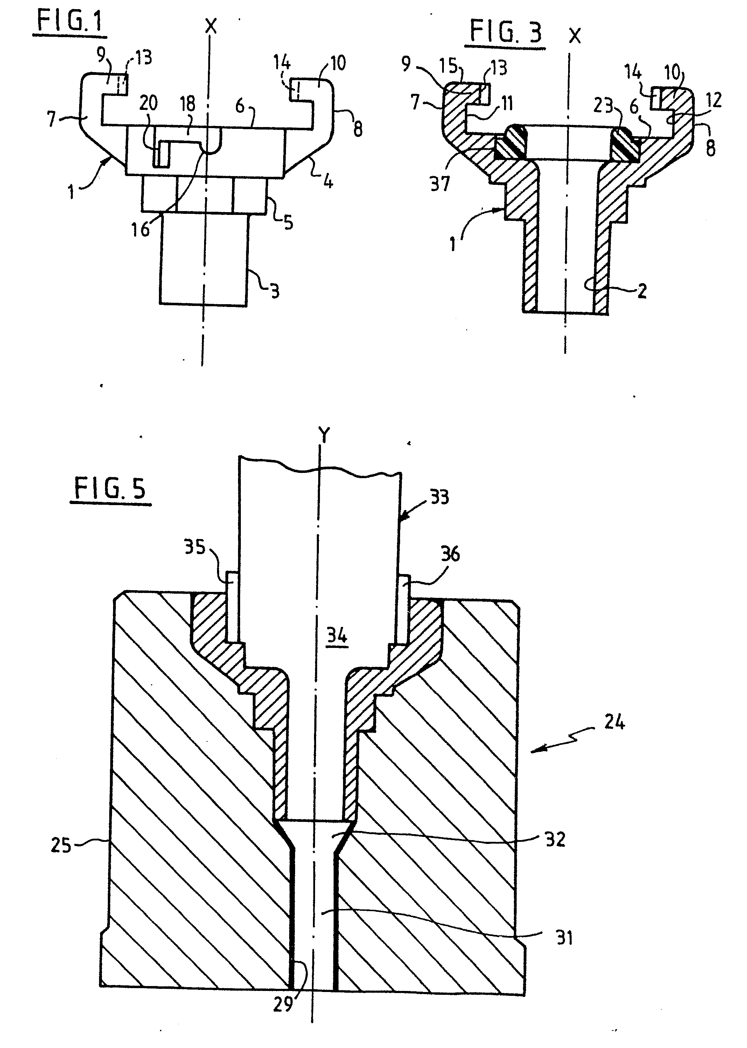

Le raccord symétrique représenté sur les figures 1 à 3 comprend de façon connue en soi un corps de révolution 1 traversé de part en part par un alésage axial 2. La face extérieure de ce corps 1 est conformée en gradins définissant les trois parties essentielles du raccord, qui sont, à l'une des extrémités du corps 1, une partie de fixation 3 d'un tuyau semi-flexible non représenté, sur laquelle l'extrémité de ce dernier peut être emmanchée et retenue au moyen par exemple d'un collier de serrage, à l'autre extrémité du corps 1, la partie d'accouplement 4 du raccord par laquelle celui-ci peut être solidarisé à un raccord identique et, entre les deux, une partie hexagonale 5 apte à coopérer avec la tête de forme complémentaire d'une clé de serrage que l'on peut être appelé à utiliser pour amener les deux raccords en prise l'un avec l'autre d'une manière qui sera décrite plus loin.

Comme on le voit mieux sur les figures 1 à 3, la partie d'accouplement 4 présente une face de raccordement lisse 6 et deux griffes identiques diamétralement opposées 7 et 8, qui font latéralement saillie au-delà de cette dernière. Chacune de ces griffes 7 ou 8 porte une lèvre rentrante 9 ou 10 qui s'étend en direction de l'axe X du corps 1, au-dessus de la face de raccordement 6, pour définir avec celle-ci une gorge 11 ou 12. Chaque lèvre 9 ou 10 est en outre pourvue, en son milieu, d'une encoche axiale 13 ou 14 qui, selon l'invention, est formée sur toute la hauteur de la lèvre de façon à déboucher à la fois dans la gorge 11 ou 12 et sur la face libre 15 des griffes. Bien entendu, les deux griffes ont une forme en arc de cercle correspondant à la forme de révolution du corps 1.

Le corps 1 porte encore, sur sa face extérieure, deux ergots diamétralement opposés 16, 17, formés respectivement entre les deux griffes 7 et 8, sensiblement à égale distance de ces dernières et au ras de la face de raccordement 6. Les ergots 16, 17 présentent une largeur légèrement inférieure à celle des encoches 13, 14 et se prolongent chacun latéralement, tous deux dans le même sens, par une barrette radiale 18 ou 19 formée également au ras

5

de la face de raccordement 6. On observera encore que chacune de ces barrettes 18 ou 19 se termine par un doigt d'arrêt 20 ou 21, séparé de l'axe de l'ergot d'une distance angulaire à peine supérieure à la demi-longueur circonférentielle d'une griffe 7 ou 8.

Enfin, l'alésage 2 du corps 1 présente, juste en-dessous de la face de raccordement 6, un logement annulaire 37, dans lequel est retenu un joint d'étanchéité en caoutchouc 23 qui fait nettement saillie au-dessus de la face de raccordement 6.

Pour assembler deux raccords de ce type, on commence par engager les deux griffes 7, 8 de l'un entre celles de l'autre, autour des zones de sa face extérieure non recouverte par les ergots 16, 17 et les barrettes associées 18, 19. Puis, on exerce une rotation d'environ 45° sur l'un des raccords, tout en maintenant le second immobile et en pressant les deux fortement l'un contre l'autre pour que les griffes 7, 8 puissent passer au-dessus des ergots 16, 17, le joint d'étanchéité 23 étant ainsi comprimé entre les faces de raccordement 6 des deux raccords. Ensuite, dès que chaque griffe 7 ou 8 vient au contact du doigt d'arrêt 20 ou 21 de la barrette respective 18 ou 19, on relâche l'effort exercé sur les raccords, si bien que les ergots 16, 17 viennent s'encliqueter dans les encoches 13,14 et que les raccords sont verrouillés l'un sur l'autre, en étant immobilisés en rotation par cet encliquetage et en translation, par le contact des griffes avec les barrettes.

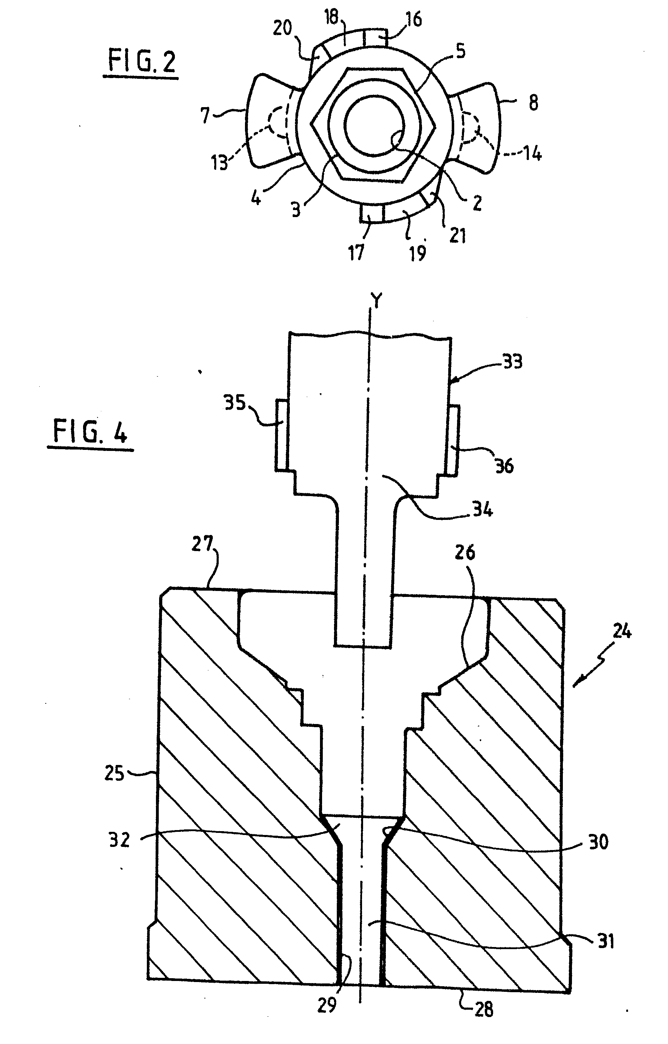

La figure 4 représente l'outillage utilisé pour la fabrication par matriçage du raccord des figures 1, 2 et 3.

Comme on peut le voir, cet outillage comprend une matrice 24 formée d'un bloc métallique 25 dans lequel est ménagée une empreinte 26 qui est centrée autour d'un axe vertical Y et présente la forme extérieure que l'on souhaite donner au raccord. L'empreinte 26 s'ouvre sur la face supérieure 27 du bloc 24 et débouche sur la face inférieure 28 de ce dernier par un alésage vertical 29 d'axe Y, communiquant avec le fond de l'empreinte 26 par une partie tronconique 30 s'évasant vers le haut. Dans cet alésage 29, vient se loger, avec un certain jeu, une tige 31 de forme complémentaire retenue par une tête tronconique 32 dans la partie supérieure 30 de l'alésage.

La matrice 24 est associée à un poinçon 33 propulsable de haut en bas le long de l'axe vertical Y de l'empreinte 26. La pointe 34 du poinçon 33, destinée à coopérer avec cette dernière présente en gros la forme intérieure du raccord sans les gorges 11, 12 et comporte notamment à cette fin deux nervures verticales arrondies 35, 36 diamétralement opposées qui correspondent à l'emplacement des encoches 13, 14 des griffes 7, 8 du raccord à façonner. De façon connue en soi, le poinçon 33 est propulsé par un vérin non représenté.

Pour fabriquer le raccord des figures 1 à 3, à l'aide de l'outillage de la figure 4, on procède comme illustré par la figure 5.

On dispose tout d'abord dans l'empreinte 26 de la matrice 24 une masse de métal ramolli d'un volume approprié, puis on actionne le poinçon 33 qui, sous l'action de sa force de propulsion et de la gravité, pénètre jusqu'au fond de l'empreinte 26 de la matrice 24 où il vient au contact de la tête 32 de la tige 31. Le métal ramolli frappé par le poinçon reflue ainsi uniformément dans tout l'espace défini entre ce dernier et la paroi de l'empreinte 26 et vient notamment remplir complètement toutes les zones en épaulement de cette dernière. Au cours de cette opération de matriçage, l'empreinte 26 de la matrice est dégazée à travers l'interstice formé entre la tige 31 et la paroi de l'alésage 29.

Selon l'invention, les encoches 13, 14 des griffes 7 et 8 du raccord sont produites au cours de l'opération de matriçage décrite ci-dessus, par un emboutissage réalisé dans le métal ramolli par les nervures arrondies 35, 36 du poinçon 33.

Après durcissement du métal, on rétracte le poinçon 33, on éjecte de bas en haut l'ébauche de raccord formée par matriçage et on usine la face de raccordement 6 à l'aide d'un tour ou autre machine-outil spéciale que l'on utilise également pour évider les gorges 11, 12 et 37. Après quelques rapides opérations d'ébavurage, on obtient le raccord fini représenté sur les figures 1 à 3.

Il va de soi que le procédé qui vient d'être décrit peut être mis en oeuvre pour fabriquer des raccords symétriques présentant une autre forme que le raccord des figures 1, 2 et 3, et l'on dispose à cette fin d'un jeu de différents poinçons et matrices complémentaires.

Ce procédé à l'avantage d'économiser de la matière et de l'énergie au moment de la mise en oeuvre puisque la masse de métal ramolli est plus proche en poids de la pièce finie et nécessite moins d'enlèvement de matière après le nettoyage.

Revendications

1. Procédé de fabrication d'un raccord du type comprenant un corps (1) de forme générale tubulaire qui comporte, à l'une de ses extrémités, une face de raccordement (6) autour de laquelle sont formés en saillie des organes d'accouplement (7, 8, 13, 14) à un raccord complémentaire, ce procédé consistant à donner au raccord sa forme générale par matriçage d'une masse de métal ramolli puis après durcissement de celui-ci, à usiner l'intérieur de l'ébauche de raccord ainsi obtenue pour donner au raccord sa forme définitive précise, caractérisé en ce que l'on réalise le matriçage de la masse de métal ramolli entre, d'une part, une matrice en une seule pièce (24) dont l'empreinte (26) est centrée autour d'un axe vertical (Y) et présente la forme extérieure à donner au raccord et, d'autre part, un poinçon (33) à déplacement vertical présentant la forme intérieure du raccord sans ses parties en contre-dépouille que l'on forme ensuite, après le durcissement du métal, lors de l'usinage de la face de raccordement (6).

2. Procédé selon la revendication 1, pour fabriquer un raccord symétrique dont les moyens d'accouplement sont constitués par deux griffes diamétralement opposées (7, 8) formées en saillie autour de la face de raccordement (6) du corps (1) et portant chacune une lèvre rentrante (9, 10) pourvue d'une encoche (13, 14) qui s'ouvre en direction de ladite face de raccordement (6), ainsi que par deux ergots (16, 17) diamétralement opposés, qui sont formés entre les griffes et se prolongent chacun latéralement, tous deux dans le même sens, par une barrette radiale (18, 19), caractérisé en ce que l'on produit les encoches (13, 14) des lèvres (9, 10) des griffes (7, 8) du raccord lors du matriçage du métal ramolli par un emboutissage réalisé sur toute la hauteur des lèvres grâce à une forme appropriée du poinçon (33).

3. Procédé selon la revendication 1 ou 2, caractérisé en ce que l'on utilise une matrice (24) dont l'empreinte (26) débouche, sur la face inférieure (28) de cette dernière, par un alésage axial (29) dans lequel est retenue, avec un certain jeu, une tige (31) dont l'extrémité supérieure (32) définit la forme d'une partie au moins de la face du raccord opposée à la face de raccordement (6) de ce dernier.

4. Raccord symétrique susceptible d'être fabriqué selon le procédé défini dans la revendication 2 ou 3, du type comprenant un corps (1) de forme générale tubulaire qui comporte, à l'une de ses extrémités, deux griffes diamétralement opposées (7, 8) formées en saillie sur une face de raccordement (6) du corps (1) et pourvues chacune d'une lèvre rentrante (9, 10) munie d'une encoche (13, 14) qui s'ouvre en direction de ladite face de raccordement (6), ainsi que deux ergots diamétralement opposés (16, 17) qui sont formés entre les deux griffes, sur la surface extérieure du corps (1), et sont prolongés chacun latéralement, dans le même sens, par une barrette radiale (18, 19), caractérisé en ce que lesdites encoches (13, 14) s'étendent sur toute la hauteur des lèvres (9, 10) des griffes (7, 8).

FIG.1

FIG. 3

FIG.5

0179000

FIG. 2

FIG. 4

**0179000**

Numéro de la demande

**RAPPORT DE RECHERCHE EUROPEENNE**

Office européen
des brevets

EP 85 40 2017

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int Cl 4) |
|---|---|---|---|
| A | FR-A- 451 369 (ZULAUF) | 1-4 | B 21 K 1/16<br>B 21 J 13/02<br>F 16 L 37/24 |
| A | DE-C- 298 746 (ALLGEMEINE ELEKTRICITÄTS-GESELLSCHAFT) | 1-4 | |
| A | DE-C- 299 572 (ALLGEMEINE ELEKTRICITÄTS-GESELLSCHAFT) | 1-4 | |
| A | DE-C- 308 899 (ZULAUF & CIE.) | 1-4 | |
| A | DE-C- 312 166 (ZULAUF & CIE.) | 1-4 | |
| A | FR-A- 634 976 (LES FILS DE PROST AINE) | 4 | |
| A | FR-A- 606 163 (INGERSOLL RAND) | 4 | DOMAINES TECHNIQUES RECHERCHES (Int. Cl.4) |
| A | GB-A-2 121 326 (CAM GEARS LTD.) | 2 | B 21 K<br>B 21 J<br>F 16 L |

Le présent rapport de recherche a été établi pour toutes les revendications

| Lieu de la recherche | Date d'achèvement de la recherche | Examinateur |
|---|---|---|
| LA HAYE | 21-11-1985 | THE K. H. |